# EUROPEAN PATENT APPLICATION

(11) **EP 0 999 682 A1**
(43) Date of publication of application: **10.05.2000**
(21) Application number: 98440251.1
(22) Date of filing: 06.11.1998
(51) Int. Cl.: H04M 1/72, H04Q 7/26

(54) **Cordless telephone system**

(71) Applicant: ALCATEL, 75008 Paris (FR)
(72) Inventor: Loeuillet, Patrick, 67200 Strassbourg (FR)
(74) Representative: Schätzle, Albin, Dipl.-Phys.

(57) **Abstract**

The base station of cordless telephone systems with more than one mobile units is often connected to a single analog telephone line. Upon reception of an incoming telephone call, all mobile units ring simultaneously. However, users often feel disturbed by telephone calls that are addressed to other persons.

According to the invention, the base station (BS) comprises detection means for detecting a called party identification signal that arrives via the analog telephone line (ATL) after a wake-up signal has been received. The base station further comprises processing means for determining to which mobile units (MU1...MUn) alert signals (ALS) are to be transmitted, this determination being dependent on the received called party identification signal.

As a result, the base station, although being connected to only one analog telephone line, functions as a small router that routes incoming calls selectively to mobile units.

## Description

The invention relates to cordless telephone systems that comprise at least two mobile units and a base station and in which the base establishes a radio connection between the mobile units and an analog telephone line.

### Background of the invention

In conventional analog telecommunication systems, no information regarding who is calling is transmitted to a called party. Recently however, analog telecommunication systems have been improved by adding special features that were previously only available in digital telecommunication systems.

US Patent No. 4,582,956 discloses a method of displaying special service information during silent intervals between ringing. Responsive to the detection of a special unmodulated signal, the telephone set of a called party receives a modulated signal containing the special service information. Preferably this special service information relates to the calling party. The telephone set of a called party may display the number of the calling party. It may even display the name of the calling party, if the telephone set comprises a memory in which telephone numbers are associated with names.

This kind of feature has been named 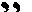 caller ID" and is subject of European Telecommunication Standards ETS 300 659-1, published in February 1997, and ETS 300659-2, published in September 1997, both issued by the European Telecommunication Standards Institute (ETSI). These standards describe a subscriber line protocol over local loop which enable called parties to identify who is calling.

### Problem to be solved

In many households or companies, cordless telephone systems have already replaced conventional telephone sets that are fixed to the telephone line by a cord. The cordless telephone systems allow users to communicate while moving freely in a certain area that usually extends to at least some dozens or even some hundred meters. Such systems usually comprise a base station that is fixed to the telephone line and one or more mobile units. The base station exchanges data with the mobile units via a radio interface. In principle, however, other cordless interfaces (e. g. optical or infrared) are also possible. The data exchange may itself be an analog or a digital one. An important example of a digital cordless telephone system has been specified in the DECT standard (DECT = Digital European Cordless Telephone).

Very often the cordless telephone system is connected to a single analog telephone line. If the base station receives an incoming telephone call, it will transmit an alert signal to all mobile units that are assigned to this particular base station. Upon reception of the alert signal, all mobile units will issue a ringing tone. Problems arise, however, if there is a plurality of users that share the cordless telephone system. If the telephone line and the cordless telephone systems supports the 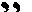 caller ID" feature, each user may see on a display on the mobile unit who is calling. The user may then decide whether he wants to answer the incoming telephone call or not. Yet it cannot be prevented that users answer telephone calls that they are not supposed to answer. If there is no support for the 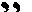 caller ID" feature, the problem is even more severe because there is no indication who is calling. Consequently, users often feel disturbed by telephone calls that are addressed to other persons.

It is therefor an object of the invention to provide a cordless telephone system that overcomes these drawbacks. A cordless telephone system that solves this problem is defined in claim 1; a base station for such a system is defined in claim 5.

### Summary of the invention

According to the invention, the cordless telephone system comprises at least two mobile units and a base station. The base station is configured to communicate over a radio link with the mobile units so as to connect the mobile units with an analog telephone line. Detection means are provided in the base station for detecting a called party identification signal, this called party identification signal arriving via said analog telephone line after a wake-up signal has been received by the base station. The base station further comprises processing means for determining to which mobile units alert signals are to be transmitted, this determination being dependent on the received called party identification signal.

According to the invention, the called party identification signal denotes a specific mobile unit (or a subset of all mobile units) that belongs to the cordless telephone system. Imagine, for example, a family that has a cordless telephone system which is connected to a single analog telephone line. Each member of the family has its own mobile unit to which a specific telephone number is assigned. A person who wants to call the daughter dials the number that is assigned to her mobile unit. In a public exchange, this number is translated into the number of the analog telephone line of the family. In addition, the public exchange transmits the number of the mobile unit in the form of a special signal - hereafter called 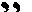 called party identification signal" - after transmitting an analog wake-up signal. This procedure is principally the same as known from systems that support the caller ID feature, apart from the fact that according to the invention the special signal does not denote who is calling but who is called. Depending on the received called party identification signal, the base station selectively alerts the mobile unit that has been called, and establishes a radio communication link to this mobile unit. If there is no reaction to the alert signal, the base station may be programmed so as to redirect the incoming call to another mobile unit or an answering machine.

As a result, the base station functions as a small switch that routes incoming calls selectively to mobile units. Except from the fact that only one party can communicate via the analog line at a given time, the invention offers a service which is comparable to that provided by expensive private telephone exchange systems.

According to an advantageous embodiment of claim 2, the base station further comprises user input means for programming the processing means. By programming the processing means, the user may assign telephone numbers to mobile units at his will. In a possible commercial realization, a network operator offers this service to his customers. The customer chooses how many telephone numbers he wants to rent for his cordless telephone system. Once the customer has the numbers, he can assigns these numbers to the mobile units by programming the base station. It is possible, for example, to assign one telephone number to one mobile unit and another telephone number to *two* other mobile units. The latter ones will ring simultaneously if the corresponding number has been dialed by a calling party. As a result, the users can configure their cordless telephone system according to their specific needs. The programming itself is preferentially carried out by entering a telephone number and then entering one or more mobile units that are to ring when someone is calling this particular telephone number.

The invention will be explained in more detail with reference to the following figures, of which
Fig. 1 shows a schematic diagram for explaining the general nature of the invention;
Fig. 2 shows a schematic diagram of base station according to the invention.

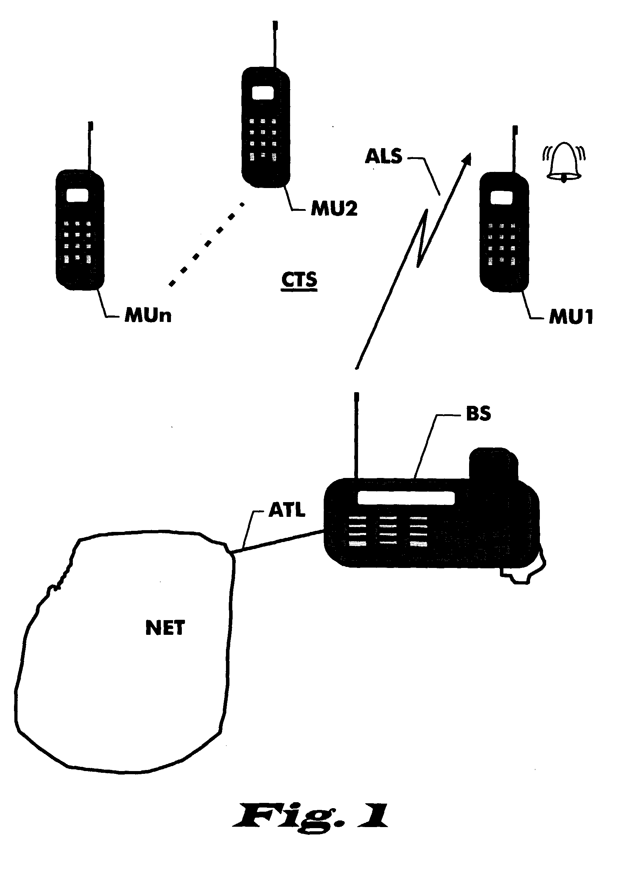

Fig. 1 shows a telephone network NET to which a base station BS of a cordless telephone system CTS is connected. The connection is provided by a conventional analog telephone line ATL. The cordless telephone system CTS further comprises n mobile units MU1...MUn. In Fig. 1, the mobile units are handsets for voice transmission. It should be noted, however, that the mobile units may also be FAX machines, answer machines, computers or the like. In this context, a mobile unit is a communication device that cordlessly exchanges data with the base station BS. This necessarily means that there is an air interface between the mobile units and the base station. Whether this air interface is based on an analog or a digital transmission protocol, does not matter in this respect.

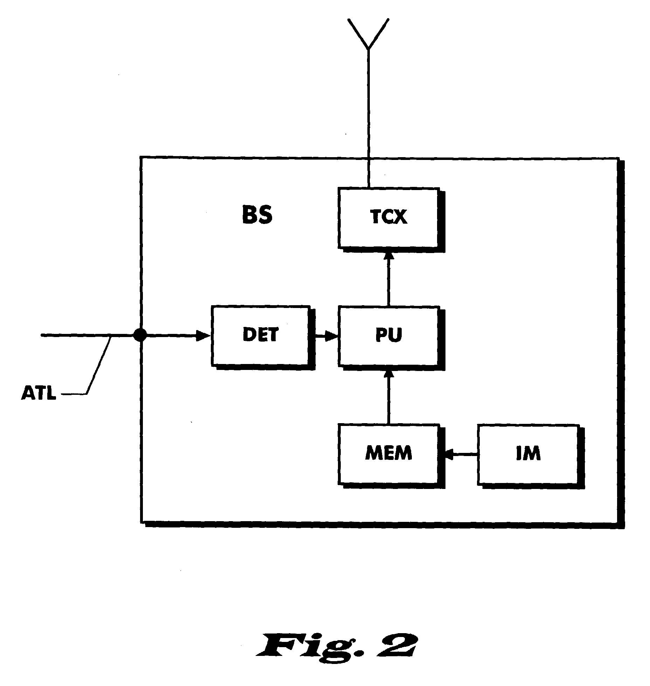

If somebody is calling, a local exchange transmits a wake-up signal to the cordless telephone system CTS or, to be more precise, to the base station BS via the analog line ATL. The form of this wake-up signal depends on the network and may, for example, be a short ring, a specific ring pattern or a change of the polarity of the line voltage. After this wake-up signal a called party identification signal is transmitted via the analog line. How this called party identification signal is further processed is described in the following with reference to Fig. 2.

Fig. 2 shows schematically those parts of a base station BS that are relevant in the context of the invention. A signal detector DET detects the called party identification signal and isolates it from other signals that may have also been received after the wake-up signal, e. g. a caller ID signal. The latter is described in detail in the European Telecommunication Standards mentioned above. The isolated called party identification signal is conveyed to a processing unit PU. The processing unit PU determines to which mobile units alert signals are to be transmitted, taking into account the received called party identification signal. The result of this determination is conveyed to a transceiver unit TCX that initiates that the determined mobile unit receives an alert signal.

There are several ways how the processing unit PU can determine to which mobile units alert signals are to be transmitted. Preferentially, the detected and isolated called party identification signal is first retranslated into a telephone number. This telephone number is then compared to a set of telephone numbers that is stored as a table in a memory MEM. The table also contains mobile unit numbers, which represent the mobile units, and information on how the telephone numbers are assigned to the unit numbers. Thus the corresponding mobile unit number may be found by simply looking up in the table. In this case, the processing unit PU conveys the mobile unit number to the transceiver unit TCX.

In a first embodiment, the contents of the table is determined by the base station itself. All incoming called party identification signals are retranslated into telephone numbers. If the table does not contain this number, a new entry is created that assigns this number to a free mobile unit (i. e. to a unit that has not yet been assigned to any number). If no free mobile unit is left, no entry is created in the table; alternatively, the number is assigned to a mobile unit that has already been assigned to a stored number.

In another advantageous embodiment, the processing unit PU is programmable by the users. To this end, the base station comprises user input means IM. These input means can be a set of keys, an interface to a computer or a voice recognition circuit. Programming in this sense means to create the table that has been described above or some kind of equivalent to such a table. Preferentially, the user is asked to enter a telephone number and then one or more mobile units that are to ring when someone is calling the entered telephone number.

The present invention does not exclude the possibility of having also a caller ID feature. The called party identification signal may even advantageously be attached to the caller ID signal so that both signals can be processed by the same processing unit. In this case, a mobile unit that is - according to the invention - selectively called also indicates who is calling.

It should be noted that the distinction between the different components mentioned above is to a certain extent arbitrary. For example, the detection means may be incorporated into the processing means which themselves could be part of a central processing unit that controls the overall function of the base station. It should be further made clear that, although in the embodiments described above the different components are digital electronic circuits, these components may equally be realized as distinct analog circuits.

## Claims

1. Cordless telephone system (CTS) comprising at least two mobile units (MU1...MUn) and a base station (BS), the base station being configured to communicate over a radio link with the mobile units so as to connect the mobile units with an analog telephone line (ATL),
**characterized in that** the base station comprises
a) detection means (DET) for detecting a called party identification signal, this called party identification signal arriving via said analog telephone line (ATL) after a wake-up signal has been received by the base station,
b) a processing unit (PU) for determining to which mobile units alert signals (ALS) are to be transmitted, this determination being dependent on the received called party identification signal.

2. Cordless telephone system (CTS) according to claim 1, in which the base station (BS) further comprises user input means (IM) for programming the processing unit (PU).

3. Cordless telephone system (CTS) according to one of the preceding claims, comprising a memory (MEM) for storing a table, the table containing assignments between called party identification signals or information representing these signals on the one hand and information representing the mobile units on the other hand.

4. Cordless telephone system (CTS) according to one of the preceding claims in which said called party identification signal is attached to a signaling signal being a so-called caller identification signal.

5. Base station (BS) for a cordless telephone system (CTS), the base station being configured to communicate over a radio link with at least two mobile units (MU1...MUn) so as to connect the mobile units with an analog telephone line (ATL),
**characterized in that** the base station comprises
a) detection means (DET) for detecting a called party identification signal, this called party identification signal arriving via said analog telephone line (ATL) after a wake-up signal has been received by the base station,
b) a processing unit (PU) for determining to which mobile units alert signals (ALS) are to be transmitted, this determination being dependent on the received called party identification signal.

6. Base station (BS) according to claim 1, further comprising user input means (IM) for programming the processing unit (PU).

7. Base station (BS) according to one of the preceding claims, comprising a memory (MEM) for storing a table, the table containing assignments between called party identification signals or information representing these signals on the one hand and information representing the mobile units on the other hand.

8. Base station (BS) according to one of the preceding claims in which said called party identification signal is attached to a signaling signal being a so-called caller identification signal.
